(19) 

**Europäisches Patentamt**
**European Patent Office**
**Office européen des brevets**

(11)  **EP 4 075 049 B1**

(12)  **EUROPEAN PATENT SPECIFICATION**

(45) Date of publication and mention
of the grant of the patent:
**31.01.2024 Bulletin 2024/05**

(21) Application number: **20900079.3**

(22) Date of filing: **10.12.2020**

(51) International Patent Classification (IPC):
**F17C 9/00** *(2006.01)*     **F17C 6/00** *(2006.01)*
**F17C 13/00** *(2006.01)*

(52) Cooperative Patent Classification (CPC):
**F17C 5/007; F17C 5/06;** F17C 2221/012;
F17C 2223/0123; F17C 2223/036;
F17C 2225/0123; F17C 2225/036;
F17C 2227/0341; F17C 2227/0388; F17C 2227/04;
F17C 2250/032; F17C 2250/034; F17C 2250/043;
F17C 2250/0439; F17C 2250/0631;     (Cont.)

(86) International application number:
**PCT/CN2020/135062**

(87) International publication number:
**WO 2021/115354 (17.06.2021 Gazette 2021/24)**

(54) **HYDROGEN FUELING PRE-COOLING CONTROL METHOD AND SYSTEM FOR HYDROGEN FUELING STATION**

VERFAHREN UND SYSTEM ZUR STEUERUNG DER
WASSERSTOFFBETANKUNGSVORKÜHLUNG EINER WASSERSTOFFBETANKUNGSSTATION

PROCÉDÉ ET SYSTÈME DE COMMANDE DE PRÉ-REFROIDISSEMENT DE RAVITAILLEMENT
EN HYDROGÈNE POUR STATION DE RAVITAILLEMENT EN HYDROGÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.12.2019 CN 201911274869**

(43) Date of publication of application:
**19.10.2022 Bulletin 2022/42**

(73) Proprietor: **Yutong Bus Co., Ltd.**
**Zhengzhou, Henan 450061 (CN)**

(72) Inventors:
• **CAO, Kuan**
**Zhengzhou, Henan 450061 (CN)**
• **CUI, Guobiao**
**Zhengzhou, Henan 450061 (CN)**
• **ZHANG, Tao**
**Zhengzhou, Henan 450061 (CN)**
• **SI, Yaohui**
**Zhengzhou, Henan 450061 (CN)**

• **ZHANG, Longhai**
**Zhengzhou, Henan 450061 (CN)**
• **LI, Jin**
**Zhengzhou, Henan 450061 (CN)**

(74) Representative: **Gulde & Partner**
**Patent- und Rechtsanwaltskanzlei mbB**
**Wallstraße 58/59**
**10179 Berlin (DE)**

(56) References cited:
**EP-A1- 3 214 355        WO-A1-2018/173136
WO-A1-2019/009794   WO-A1-2019/126974
CN-A- 101 832 467      CN-A- 101 832 467
CN-A- 101 832 467      CN-A- 109 827 068
CN-A- 109 827 068      CN-A- 111 006 129
CN-U- 209 622 465      JP-A- 2011 017 406
JP-A- 2017 129 259      JP-A- 2019 035 479
US-A1- 2012 227 864   US-A1- 2014 290 790**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
F17C 2260/023; F17C 2260/025; F17C 2265/065;
F17C 2270/0139; Y02P 90/45

## Description

### TECHNICAL FIELD

The present invention relates to a hydrogen fueling pre-cooling control method and system for a hydrogen fueling station, and belongs to the field of new energy.

### BACKGROUND

A hydrogen fueling station is a special place for filling a fuel cell vehicle with hydrogen. The hydrogen fueling station includes the following main equipment: a gas discharge column, a hydrogen compressor, a hydrogen dispenser, an energy accumulator (that is, a hydrogen storage tank), and a station control system. The hydrogen is pressurized by the compressor and then enters the hydrogen dispenser, and is fueled into an onboard hydrogen storage cylinder of the fuel cell vehicle through the hydrogen dispenser. The hydrogen fueling station often performs fueling at a low pressure, a medium pressure, and a high pressure. The hydrogen is expanded in the hydrogen storage cylinder through a solenoid valve. Due to the Joule-Thomson effect of hydrogen, the fueling speed is fast, and the failure of the onboard hydrogen storage system to dissipate heat in time may cause the temperature of the hydrogen storage cylinder to exceed the maximum working temperature. At present, the maximum working temperature of the hydrogen storage cylinder with an carbon fiber aluminum liner wound prevailing on the world market is 85°C. In practical application, it is found that when the ambient temperature in summer is high, the initial temperature of the hydrogen storage cylinder and the hydrogen to be fueled is high, and the hydrogen fueling rate is too fast, causing the temperature of the hydrogen storage cylinder to exceed the maximum working temperature, and causing risks such as damage to the hydrogen storage cylinder and hydrogen leakage.

In order to ensure that the temperature of the hydrogen storage cylinder does not exceed the maximum working temperature, there are two main existing solutions. One solution is to set the refrigeration unit at a constant and lower pre-cooling temperature. Although the method can achieve the pre-cooling effect, a large amount of energy is wasted relative to a heat exchange amount required for the actual pre-cooling of hydrogen. The other solution is to fuel hydrogen to a fuel cell vehicle at a lower fueling rate. Although the method can prevent the temperature rise of the hydrogen storage cylinder from being too fast, the hydrogen fueling rate is relatively slow, the hydrogen fueling time is relatively long, and the efficiency is relatively low.

Conventional methods are known from CN101832467A and US2012/227864A1.

## SUMMARY

An objective of the present invention is to provide a hydrogen fueling pre-cooling control method and system for a hydrogen fueling station, so as to solve the problem that the existing hydrogen fueling station cannot balance a hydrogen fueling speed and energy consumption.

In order to achieve the above objective, the present invention provides a hydrogen fueling pre-cooling control method for a hydrogen fueling station, including the following steps:

1) acquiring initial temperature data and initial pressure data of a hydrogen storage cylinder; and
2) according to the initial temperature data, the initial pressure data, and a set hydrogen fueling amount, calculating a value $Q_1$ of heat generated when a hydrogen dispenser performs hydrogen fueling in a maximum rate mode and a value $Q_2$ of heat generated when the hydrogen storage cylinder reaches a set temperature upper limit $T_0$ during hydrogen fueling; the maximum rate mode of the hydrogen dispenser is that the hydrogen dispenser always performs hydrogen fueling at a maximum capacity; comparing $Q_1$ with $Q_2$, when $Q_1 < Q_2$, directly controlling the hydrogen dispenser to perform hydrogen fueling in the maximum rate mode without starting a refrigeration unit; and when $Q_1 > Q_2$, starting the refrigeration unit; after the refrigeration unit is started, a precooling temperature of the refrigeration unit is set to $t_2$, $t_2$ is less than or equal to t; and the hydrogen dispenser is controlled to perform hydrogen fueling in the maximum rate mode by a hydrogen fueling station control system, wherein t is calculated according to the formula $Q_1 - Q_2 = c \times m \times (t - t_1)$, c is a specific heat capacity of a refrigerant of the refrigeration unit, m is a refrigerant mass of the refrigeration unit, $t_1$ is a default temperature of the refrigerant of the refrigeration unit, and t is a pre-cooling temperature of the refrigerant of the refrigeration unit;

Or according to the initial temperature data, the initial pressure data, and the set hydrogen fueling amount, calculating an estimated temperature T of the hydrogen storage cylinder under the condition that the hydrogen dispenser performs hydrogen fueling at the maximum rate mode; comparing T with the set temperature upper limit $T_0$ of the hydrogen storage cylinder, and when $T < T_0$, directly controlling the hydrogen dispenser to perform hydrogen fueling in the maximum rate mode without starting a refrigeration unit; and when $T > T_0$, starting the refrigeration unit;

the hydrogen fueling pre-cooling method for a hydrogen fueling station further comprises the following steps:

calculating a ratio $\frac{\Delta P}{\Delta T}$ of variations of a pressure and a temperature of the hydrogen storage cylinder within a set time during the hydrogen fueling by the hydrogen dispenser in the maximum rate mode, and adjusting a hydrogen fueling mode and an operating state of the refrigeration unit according to a value of $\frac{\Delta P}{\Delta T}$;

reducing the pre-cooling temperature of the refrigeration unit and performing hydrogen fueling in a mode below the maximum rate when $\frac{\Delta P}{\Delta T} < a$;

maintaining the pre-cooling temperature and performing hydrogen fueling in the maximum rate mode until ending of the hydrogen fueling when $a < \frac{\Delta P}{\Delta T} < b$; and

increasing the pre-cooling temperature of the refrigeration unit and performing hydrogen fueling in the maximum rate mode when $\frac{\Delta P}{\Delta T} > b$, wherein $a = \frac{P_{max} - P_{min}}{T_{max} - T_h}$, $b = \frac{P_{max} - P_{min}}{T_{max} - T_l}$, $P_{max}$ is a maximum allowable filling pressure of the hydrogen storage cylinder, $P_{min}$ is a minimum allowable filling pressure of the hydrogen storage cylinder, $T_{max}$ is a maximum allowable working temperature of the hydrogen storage cylinder, $T_h$ is a local minimum ambient temperature, and $T_l$ is a local maximum ambient temperature.

In addition, the present invention further provides a hydrogen fueling pre-cooling control system for a hydrogen fueling station, including a hydrogen fueling station control system, a hydrogen dispenser, and a refrigeration unit. The hydrogen fueling station control system controls and connects to the hydrogen dispenser and the refrigeration unit. The hydrogen fueling station control system includes a memory, a processor, and a computer program stored in the memory and executable on the processor, and hydrogen fueling station control system is configured to be communicatively connected to a hydrogen system controller of a vehicle to acquire a temperature and a pressure of a hydrogen storage cylinder. The processor implements the hydrogen fueling pre-cooling control method for a hydrogen fueling station when executing the computer program.

The above control method and system have the following beneficial effects. During hydrogen fueling in a mode of a set rate, the on/off state of the refrigeration unit is adjusted according to the initial temperature and the initial pressure of the hydrogen storage cylinder. In this way, a waste of energy caused by blindly setting the refrigeration unit at a constant and low pre-cooling temperature is avoided, the hydrogen fueling rate is convenient to be controlled and increased, and a balance between hydrogen fueling speed and energy consumption is realized.

**BRIEF DESCRIPTION OF THE DRAWINGS**

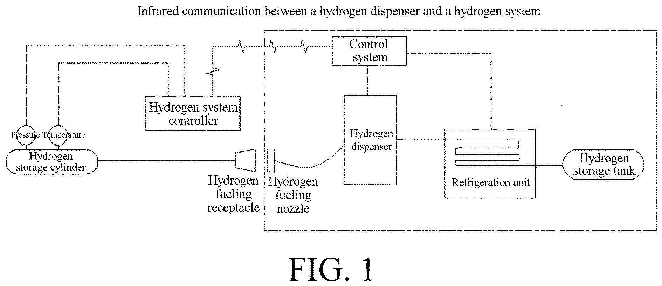

FIG. 1 is a schematic diagram of a hydrogen fueling system in embodiment 1 of a hydrogen fueling pre-cooling control method for a hydrogen fueling station according to the present invention.

**DETAILED DESCRIPTION**

Embodiment 1 of a hydrogen fueling pre-cooling control method for a hydrogen fueling station:

As shown in FIG. 1, the hydrogen fueling station is on the right, and a fuel cell vehicle is on the left. The hydrogen fueling station includes a hydrogen storage tank, a refrigeration unit, a hydrogen dispenser, a hydrogen fueling nozzle, and a control system. The control system is connected to the refrigeration unit, and is configured to control an on/off state of the refrigeration unit and a preset temperature in the on state. The control system is connected to the hydrogen dispenser and is configured to control a fueling speed.

The fuel cell vehicle includes a hydrogen storage cylinder and a hydrogen system controller. In this embodiment, the control system of the hydrogen fueling station is connected to the hydrogen system controller through infrared communication, and is configured to acquire pressure and temperature information of the vehicle hydrogen storage cylinder by using the hydrogen system controller. In this embodiment, the core idea of the hydrogen fueling pre-cooling control method for a hydrogen fueling station is that the operating state of the refrigeration unit and the hydrogen fueling speed of the hydrogen dispenser are optimally controlled based on the acquired pressure and temperature information of the vehicle hydrogen storage cylinder.

The hydrogen fueling pre-cooling control method for a hydrogen fueling station includes the following main steps.

The control system of the hydrogen fueling station acquires an initial temperature data and an initial pressure data of the hydrogen storage cylinder from the hydrogen system controller of the vehicle, then based on the initial temperature data, the initial pressure data, and a hydrogen fueling amount, calculates a value $Q_1$ of heat generated during hydrogen fueling in a mode of a maximum rate and a value $Q_2$ of heat generated during hydrogen fueling when the temperature of the hydrogen storage cylinder reaches 70°C, and then compares $Q_1$ with $Q_2$.

If $Q_1 < Q_2$, the control system does not start the refrigeration unit, and directly controls the hydrogen dispenser to perform hydrogen fueling in the mode of the

maximum rate.

If $Q_1 > Q_2$, a temperature t (that is, a hydrogen pre-cooling temperature for hydrogen pre-cooling; the refrigeration unit exchanges heat with the hydrogen in the pipeline for pre-cooling by using a refrigerant, and therefore t is also the pre-cooling temperature of the refrigerant in the refrigeration unit) of the refrigeration unit that needs to be set is calculated according to the calculation formula of the heat exchange amount required for hydrogen. The control system starts the refrigeration unit, the temperature is set to t, and then the control system controls the hydrogen dispenser to start hydrogen fueling in the mode of the maximum rate. During the hydrogen fueling in the mode of the maximum rate, a ratio of variations of a pressure and a temperature of the vehicle within a set time is calculated and compared with a rated value set in the control system. When $\frac{\Delta P}{\Delta T} < a$, the control system reduces the hydrogen pre-cooling temperature of the refrigeration unit, and performs hydrogen fueling in a mode below the maximum rate. When $\frac{\Delta P}{\Delta T} > b$, the control system increases the hydrogen pre-cooling temperature of the refrigeration unit, and performs hydrogen fueling in the mode of the maximum rate. When $a < \frac{\Delta P}{\Delta T} < b$, the pre-cooling temperature is unchanged, and the hydrogen fueling is performed in the mode of the maximum rate until ending of the hydrogen fueling. In the formula, $\Delta P$ is a difference between a pressure at an $(n+\Delta n)^{th}$ second and a pressure at an $n^{th}$ second of the hydrogen storage cylinder during the hydrogen fueling, $\Delta P = P_{n+\Delta n} - P_n$, $\Delta T$ is a difference between a temperature at the $(n+\Delta n)^{th}$ second and a temperature at the $n^{th}$ second of the hydrogen storage cylinder during the hydrogen fueling, and $\Delta T = T_{n+\Delta n} - T_n$. $a = \frac{P_{max} - P_{min}}{T_{max} - T_h}$, $b = \frac{P_{max} - P_{min}}{T_{max} - T_l}$, $P_{max}$ is a maximum allowable filling pressure of the hydrogen storage cylinder, $P_{min}$ is a minimum allowable filling pressure of the hydrogen storage cylinder, $T_{max}$ is a maximum allowable working temperature of the hydrogen storage cylinder, $T_h$ is a local minimum ambient temperature, and $T_l$ is a local maximum ambient temperature.

The formula for calculating the heat exchange amount required for hydrogen is as follows:

$$Q_1 - Q_2 = c \times m \times (t - t_1)$$

$Q_1$--Heat value generated when a fuel cell vehicle is fueled with hydrogen at the maximum rate, J;

$Q_2$--Heat value generated when the temperature of the hydrogen storage cylinder fueled with hydrogen is 70°C, J;

c--Specific heat capacity of the refrigerant, J/(kg°C);

m--Refrigerant mass, kg;

t--Set temperature of the refrigerant, °C;

$t_1$--Default temperature of the refrigerant, °C.

The mode of the so-called maximum rate is not performing hydrogen fueling at a fixed rate, but always at the maximum capacity. The factors limiting the hydrogen fueling rate mainly include control conditions such as a pressure of a gas source (a low pressure source, a medium pressure source, and a high pressure source), flow rate control of the hydrogen dispenser (for example, the flow rate may be controlled by a valve opening), and the like. In this embodiment, the hydrogen fueling by using the high pressure source and the maximum valve opening is used as an example, so as to obtain the control strategy in the case of hydrogen fueling for the hydrogen fueling station in the mode of the maximum rate, and minimize the hydrogen fueling time. In other implementations, the calculation and hydrogen fueling control may also be performed by using the low pressure source or the medium pressure source or other valve openings.

In this embodiment, $Q_2$ corresponding to the temperature of the hydrogen storage cylinder of 70°C is calculated. In other implementations, $Q_2$ may also be calculated at a temperature lower or higher than 70°C. In this case, the idea of controlling the refrigeration unit and the hydrogen dispenser has not changed, and only the physical meaning is changed.

In this embodiment, $Q_1$ and $Q_2$ may be obtained by software simulation or experiment or calculation based on heat calculation formula, which will not be described in this embodiment.

Embodiment 2 of a hydrogen fueling pre-cooling control method for a hydrogen fueling station:

The difference between this embodiment and embodiment 1 of the hydrogen fueling pre-cooling control method for a hydrogen fueling station is as follows. Embodiment 1 of the hydrogen fueling pre-cooling control method for a hydrogen fueling station is controlled based on the heat values $Q_1$ and $Q_2$. However, in this embodiment, a temperature T that the hydrogen storage cylinder is expected to reach during hydrogen fueling in the mode of the maximum rate is calculated according to the initial temperature data, the initial pressure data, and the hydrogen fueling amount, and the on/off state of the refrigeration unit is controlled according to a result of comparison between the temperature T and 70°C. Specifically, when T<70°C, the refrigeration unit is not started, and the hydrogen fueling may be directly performed in the mode of the maximum rate. When T>70°C, the hydrogen fueling cannot be directly performed in the mode of the maximum rate, and the refrigeration unit needs to be started.

During the hydrogen fueling in the mode of the maximum rate, a ratio of variations of the pressure and the temperature of the vehicle within the set time is calculated and compared with a rated value set in the control system. When $\frac{\Delta P}{\Delta T} < a$, the control system reduces the hydrogen pre-cooling temperature of the refrigeration unit, and performs hydrogen fueling in a mode below the maximum rate. When $\frac{\Delta P}{\Delta T} > b$, the control system increases the hydrogen pre-cooling temperature of the refrigeration unit, and performs hydrogen fueling in the mode of the maximum rate. When $a < \frac{\Delta P}{\Delta T} < b$, the pre-cooling temperature is unchanged, and the hydrogen fueling is performed in the mode of the maximum rate until ending of the hydrogen fueling. In the formula, $\Delta P$ is a difference between a pressure at an $(n+\Delta n)^{th}$ second and a pressure at an $n^{th}$ second of the hydrogen storage cylinder during the hydrogen fueling, $\Delta P = P_{n+\Delta n} - P_n$, $\Delta T$ is a difference between a temperature at the $(n+\Delta n)^{th}$ second and a temperature at the $n^{th}$ second of the hydrogen storage cylinder during the hydrogen fueling, and

$$\Delta T = T_{n+\Delta n} - T_n . \ a = \frac{P_{max} - P_{min}}{T_{max} - T_h}, \ b = \frac{P_{max} - P_{min}}{T_{max} - T_l},$$

$P_{max}$ is a maximum allowable filling pressure of the hydrogen storage cylinder, $P_{min}$ is a minimum allowable filling pressure of the hydrogen storage cylinder, $T_{max}$ is a maximum allowable working temperature of the hydrogen storage cylinder, $T_h$ is a local minimum ambient temperature, and $T_l$ is a local maximum ambient temperature.

In this embodiment, the temperature of the hydrogen storage cylinder is 70° C by way of example for comparison. In other implementations, the temperature value may also be reset as required.

Embodiment of a hydrogen fueling pre-cooling control system for a hydrogen fueling station:
A hydrogen fueling pre-cooling control system for a hydrogen fueling station of this embodiment includes a hydrogen fueling station control system, a hydrogen dispenser, and a refrigeration unit. The hydrogen fueling station control system controls and connects to the hydrogen dispenser and the refrigeration unit. The hydrogen fueling station control system includes a memory, a processor, and a computer program stored in the memory and executable on the processor, and is configured to be communicatively connected to a hydrogen system controller of a vehicle to acquire a temperature and a pressure of a hydrogen storage cylinder. The processor implements the hydrogen fueling pre-cooling control method for a hydrogen fueling station in the embodiment of the hydrogen fueling pre-cooling control method for a hydrogen fueling station when executing the computer program.

The hydrogen fueling pre-cooling control method for a hydrogen fueling station has been described in the embodiment of the hydrogen fueling pre-cooling control method for a hydrogen fueling station, and the details are not described herein again.

**Claims**

1. A hydrogen fueling pre-cooling control method for a hydrogen fueling station comprising the following steps:

    1) acquiring initial temperature data and initial pressure data of a hydrogen storage cylinder; and
    2) according to the initial temperature data, the initial pressure data, and a set hydrogen fueling amount, calculating a value $Q_1$ of heat generated when a hydrogen dispenser performs hydrogen fueling in a maximum rate mode and a value $Q_2$ of heat generated when the hydrogen storage cylinder reaches a set temperature upper limit $T_0$ during hydrogen fueling; the maximum rate mode of the hydrogen dispenser is that the hydrogen dispenser always performs hydrogen fueling at a maximum capacity; comparing $Q_1$ with $Q_2$, when $Q_1 < Q_2$, directly controlling the hydrogen dispenser to perform hydrogen fueling in the maximum rate mode without starting a refrigeration unit; and when $Q_1 > Q_2$, starting the refrigeration unit; after the refrigeration unit is started, a pre-cooling temperature of the refrigeration unit is set to $t_2$, $t_2$ is less than or equal to t; and the hydrogen dispenser is controlled to perform hydrogen fueling in the maximum rate mode by a hydrogen fueling station control system, wherein t is calculated according to the formula $Q_1 - Q_2 = c \times m \times (t - t_1)$, c is a specific heat capacity of a refrigerant of the refrigeration unit, m is a refrigerant mass of the refrigeration unit, $t_1$ is a default temperature of the refrigerant of the refrigeration unit, and t is a pre-cooling temperature of the refrigerant of the refrigeration unit;
    Or according to the initial temperature data, the initial pressure data, and the set hydrogen fueling amount, calculating an estimated temperature T of the hydrogen storage cylinder under the condition that the hydrogen dispenser performs hydrogen fueling in the maximum rate mode; comparing T with the set temperature upper limit $T_0$ of the hydrogen storage cylinder, and when $T < T_0$, directly controlling the hydrogen dispenser to perform hydrogen fueling in the maximum rate mode without starting a refrigeration unit; and when $T > T_0$, starting the refrigeration unit;
    wherein the hydrogen fueling pre-cooling method for a hydrogen fueling station further comprises the following steps:

calculating a ratio $\frac{\Delta P}{\Delta T}$ of variations of a pressure and a temperature of the hydrogen storage cylinder within a set time during the hydrogen fueling by the hydrogen dispenser in the maximum rate mode, and adjusting a hydrogen fueling mode and an operating state of the refrigeration unit according to a value of $\frac{\Delta P}{\Delta T}$;

reducing the pre-cooling temperature of the refrigeration unit and performing hydrogen fueling in a mode below the maximum rate when $\frac{\Delta P}{\Delta T} < a$;

maintaining the pre-cooling temperature and performing hydrogen fueling in the maximum rate mode until ending of the hydrogen fueling when $a < \frac{\Delta P}{\Delta T} < b$; and

increasing the pre-cooling temperature of the refrigeration unit and performing hydrogen fueling in the maximum rate mode when $\frac{\Delta P}{\Delta T} > b$, wherein

$$a = \frac{P_{max} - P_{min}}{T_{max} - T_h}, \quad b = \frac{P_{max} - P_{min}}{T_{max} - T_l},$$

$P_{max}$ is a maximum allowable filling pressure of the hydrogen storage cylinder, $P_{min}$ is a minimum allowable filling pressure of the hydrogen storage cylinder, $T_{max}$ is a maximum allowable working temperature of the hydrogen storage cylinder, $T_h$ is a local minimum ambient temperature, and $T_l$ is a local maximum ambient temperature.

2. A hydrogen fueling pre-cooling control system for a hydrogen fueling station comprising a hydrogen fueling station control system, a hydrogen dispenser, and a refrigeration unit, wherein the hydrogen fueling station control system controls and connects to the hydrogen dispenser and the refrigeration unit, the hydrogen fueling station control system comprises a memory, a processor, and a computer program stored in the memory and executable on the processor, **characterized in that** the hydrogen fueling station control system is configured to be communicatively connected to a hydrogen system controller of a vehicle to acquire a temperature and a pressure of a hydrogen storage cylinder; and the processor implements the hydrogen fueling pre-cooling control method for a hydrogen fueling station according to claim 1 when executing the computer program.

**Patentansprüche**

1. Verfahren zur Steuerung der Wasserstoffbetankungsvorkühlung für eine Wasserstoffbetankungsstation, das die folgenden Schritte umfasst:

1) Erfassen von Anfangstemperaturdaten und Anfangsdruckdaten eines Wasserstoffspeicherzylinders; und,
2) gemäß den Anfangstemperaturdaten, den Anfangsdruckdaten und einer eingestellten Betankungsmenge, Berechnen eines Werts $Q_1$, der Wärme, die erzeugt wird, wenn eine Wasserstoffzapfanlage eine Wasserstoffbetankung in einem Modus mit maximaler Rate durchführt, und eines Wertes $Q_2$ von Wärme, die erzeugt wird, wenn der Wasserstoffspeicherzylinder eine eingestellte obere Temperaturgrenze $T_0$ während der Wasserstoffbetankung erreicht; wobei der Modus mit maximaler Rate der Wasserstoffzapfanlage ist, dass die Wasserstoffzapfanlage die Wasserstoffbetankung immer mit einer maximalen Kapazität durchführt; Vergleichen von $Q_1$ mit $Q_2$, wenn $Q_1 < Q_2$, direktes Steuern der Wasserstoffzapfanlage, um die Wasserstoffbetankung im Modus mit maximaler Rate durchzuführen, ohne ein Kühlaggregat zu starten; und wenn $Q_1 > Q_2$, Starten der Kühleinheit; wobei nach dem Starten der Kühleinheit eine Vorkühltemperatur der Kühleinheit auf $t_2$ eingestellt wird, wobei $t_2$ kleiner oder gleich t ist; und die Wasserstoffzapfanlage so gesteuert wird, dass sie eine Wasserstoffbetankung im Modus mit maximaler Rate durch ein System zur Steuerung einer Wasserstoffbetankungsstation durchführt, wobei t gemäß der Formel $Q_1 - Q_2 = c \times m \times (t - t_1)$ berechnet wird, c eine spezifische Wärmekapazität eines Kältemittels der Kühleinheit ist, m eine Kältemittelmasse der Kühleinheit ist, $t_1$ eine Standardtemperatur des Kältemittels der Kühleinheit ist, und t eine Vorkühltemperatur des Kältemittels der Kühleinheit ist,

oder gemäß den Anfangstemperaturdaten, den Anfangsdruckdaten und der eingestellten Wasserstoffbetankungsmenge, Berechnen einer geschätzten Temperatur T des Wasserstoffspeicherzylinders unter der Bedingung, dass die Wasserstoffzapfanlage die Wasserstoffbetankung im Modus mit maximaler Rate durchführt; Vergleichen von T mit der eingestellten oberen Temperaturgrenze $T_0$ des Wasserstoffspeicherzylinders, und wenn $T < T_0$, direktes Steuern der Wasserstoffzapfanlage, um die Wasserstoffbetankung im Modus mit maximaler Rate durchzuführen, ohne eine Kühleinheit zu starten; und wenn $T > T_0$, Starten der Kühleinheit; wobei das Verfahren zur Wasserstoffbetankungsvorkühlung für eine Wasserstoffbetankungsstation ferner die folgenden Schritte umfasst:

Berechnen eines Verhältnisses $\frac{\Delta P}{\Delta T}$ von Änderungen eines Drucks und einer Temperatur des Wasserstoffspeicherzylinders innerhalb einer eingestellten Zeit während der Wasserstoffbetankung durch die Wasserstoffzapfanlage im Modus mit maximaler Rate, und Einstellen eines Wasserstoffbetankungsmodus und eines Betriebszustands der Kühleinheit gemäß einem Wert von $\frac{\Delta P}{\Delta T}$ ;

Verringern der Vorkühltemperatur der Kühleinheit und Durchführung der Wasserstoffbetankung in einem Modus unterhalb der maximalen Rate, wenn $\frac{\Delta P}{\Delta T} < a$ ;

Aufrechterhaltung der Vorkühltemperatur und Durchführung der Wasserstoffbetankung im Modus der maximalen Rate bis zum Ende der Wasserstoffbetankung, wenn $a < \frac{\Delta P}{\Delta T} < b$ ; und

Erhöhen der Vorkühltemperatur der Kühleinheit und Durchführen der Wasserstoffbetankung im Modus mit maximaler Rate, wenn $\frac{\Delta P}{\Delta T} > b$ , wobei

$$a = \frac{P_{max} - P_{min}}{T_{max} - T_h} , \qquad b = \frac{P_{max} - P_{min}}{T_{max} - T_l} ,$$

$P_{max}$ ein maximal zulässiger Fülldruck des Wasserstoffspeicherzylinders ist, $P_{min}$ der minimal zulässige Befüllungsdruck des Wasserstoffspeicherzylinders ist, $T_{max}$ die maximal zulässige Betriebstemperatur des Wasserstoffspeicherzylinders ist, $T_h$ die örtliche Mindestumgebungstemperatur ist und $T_l$ eine lokale maximale Umgebungstemperatur ist.

2. System zur Steuerung der Wasserstoffbetankungsvorkühlung für eine Wasserstoffbetankungsstation, das ein System zum Steuern der Wasserstoffbetankungsstation, eine Wasserstoffzapfanlage und eine Kühleinheit umfasst, wobei das System zur Steuerung der Wasserstoffbetankungsstation die Wasserstoffzapfanlage und die Kühleinheit steuert und mit ihnen verbunden ist, wobei das System zur Steuerung der Wasserstoffbetankungsstation einen Speicher, einen Prozessor und ein Computerprogramm umfasst, das in dem Speicher gespeichert ist und auf dem Prozessor ausgeführt werden kann, **da-** **durch gekennzeichnet, dass** das System zur Steuerung der Wasserstoffbetankungsstation so konfiguriert ist, dass es kommunizierend mit einer Steuerung des Wasserstoffsystems eines Fahrzeugs verbunden ist, um eine Temperatur und einen Druck eines Wasserstoffspeicherzylinders zu erfassen; und der Prozessor das Verfahren zur Steuerung der Wasserstoffbetankungsvorkühlung für eine Wasserstoffbetankungsstation nach Anspruch 1 implementiert, wenn er das Computerprogramm ausführt.

**Revendications**

1. Procédé de commande de pré-refroidissement de ravitaillement en hydrogène pour une station de ravitaillement en hydrogène comprenant les étapes suivantes :

1) acquérir des données de température initiale et de pression initiale d'un cylindre de stockage d'hydrogène ; et
2) en fonction des données de température initiale, des données de pression initiale et d'une quantité de ravitaillement en hydrogène définie, calculer une valeur $Q_1$ de chaleur générée lorsqu'un distributeur d'hydrogène effectue le ravitaillement en hydrogène dans un mode de débit maximal et une valeur $Q_2$ de chaleur générée lorsque le cylindre de stockage d'hydrogène atteint une limite supérieure de température définie $T_0$ pendant le ravitaillement en hydrogène ; le mode de débit maximal du distributeur d'hydrogène est que le distributeur d'hydrogène effectue toujours le ravitaillement en hydrogène à une capacité maximale ; comparer $Q_1$ avec $Q_2$ lorsque $Q_1 < Q_2$ , commander directement le distributeur d'hydrogène pour effectuer le ravitaillement en hydrogène en mode de débit maximal sans démarrer une unité de réfrigération ; et lorsque $Q_1 > Q_2$, démarrer l'unité de réfrigération ; après que l'unité de réfrigération a été démarré, une température de pré-refroidissement est réglée à $t_1$, $t_2$ étant inférieur ou égal à t ; et le distributeur d'hydrogène est commandé pour effectuer le ravitaillement en hydrogène dans le mode de débit maximal par un système de commande de station de ravitaillement en hydrogène, dans lequel t est calculé selon la formule $Q_1 - Q_2 = c \times m \times (t - t_1)$, c est la capacité thermique spécifique d'un réfrigérant de l'unité de réfrigération, m est la masse de réfrigérant de l'unité de réfrigération, $t_1$ est la température par défaut du réfrigérant de l'unité de réfrigération et t est la température de pré-refroidissement du réfrigérant de l'unité de réfrigération ; ou, en fonction des données de température initiale, des données de pression initiale et de la quantité de ravitaillement en hydrogène réglée, calculer une température estimée T du cylindre de stockage d'hydrogène dans la condition où le distributeur d'hydrogène effectue le ravitaillement en hydrogène en mode de débit maximal ; comparer T à la limite supérieure de température réglée $T_0$ du cylindre de stockage d'hydrogène, et lorsque $T < T_0$, commander directement le distributeur d'hydrogène pour effectuer le ravitaillement en hydrogène en mode de débit maximal sans démarrer une unité de réfrigération ; et lorsque $T > T_0$, démarrer l'unité de réfrigération ;

dans lequel le procédé de pré-refroidissement de ravitaillement en hydrogène pour une station de ravitaillement en hydrogène comprend en outre les étapes suivantes :

calculer un rapport $\dfrac{\Delta P}{\Delta T}$ des variations d'une pression et d'une température du cylindre de stockage d'hydrogène dans un temps donné pendant le ravitaillement en hydrogène par le distributeur d'hydrogène en mode de débit maximal, et régler un mode de ravitaillement en hydrogène et un état de fonctionnement de l'unité de réfrigération en fonction d'une valeur de $\dfrac{\Delta P}{\Delta T}$ ;

réduire la température de pré-refroidissement de l'unité de réfrigération et effectuer le ravitaillement en hydrogène dans un mode inférieur au débit maximal lorsque $\dfrac{\Delta P}{\Delta T} < a$ ;

maintenir la température de pré-refroidissement et effectuer le ravitaillement en hydrogène en mode de débit maximal jusqu'à la fin du ravitaillement en hydrogène lorsque $a < \dfrac{\Delta P}{\Delta T} < b$ ; et

augmenter la température de pré-refroidissement de l'unité de réfrigération et effectuer le ravitaillement en hydrogène en mode de débit maximal lorsque $\dfrac{\Delta P}{\Delta T} > b$, dans lequel

$a = \dfrac{P_{max} - P_{min}}{T_{max} - T_h}$, $b = \dfrac{P_{max} - P_{min}}{T_{max} - T_l}$, $P_{max}$ est une pression de remplissage maximale admissible du cylindre de stockage d'hydrogène, $P_{min}$ est la pression de remplissage minimale admissible du cylindre de stockage d'hydrogène, $T_{max}$ est la température de service maximale admissible du cylindre de stockage d'hydrogène, $T_h$ est la température ambiante minimale locale, et $T_l$ est la température ambiante maximale locale .

2. Système de commande de pré-refroidissement de ravitaillement en hydrogène pour une station de ravitaillement en hydrogène comprenant un système de commande de station de ravitaillement en hydrogène, un distributeur d'hydrogène, et une unité de réfrigération, dans lequel le système de commande de station de ravitaillement en hydrogène commande et se connecte au distributeur d'hydrogène et à l'unité de réfrigération, le système de commande de station de ravitaillement en hydrogène comprend une mémoire, un processeur, et un programme informatique stocké dans la mémoire et exécutable sur le processeur, **caractérisé en ce que** le système de commande de station de ravitaillement en hydrogène est configuré pour être connecté de manière communicative à une commande de système d'hydrogène d'un véhicule pour acquérir une température et une pression d'un cylindre de stockage d'hydrogène ; et le processeur met en oeuvre le procédé de commande de pré-refroidissement de ravitaillement en hydrogène pour une station de ravitaillement en hydrogène selon la revendication 1 lors de l'exécution du programme d'ordinateur.

Infrared communication between a hydrogen dispenser and a hydrogen system

FIG. 1

**EP 4 075 049 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 101832467 A
- US 2012227864 A1